Europäisches Patentamt

European Patent Office

Office européen des brevets

(19)

(11) Veröffentlichungsnummer: **0 019 221**
A2

(12) **EUROPÄISCHE PATENTANMELDUNG**

(21) Anmeldenummer: 80102534.7

(22) Anmeldetag: 08.05.80

(51) Int. Cl.³: **B 41 M 3/06**
B 32 B 29/00, D 21 H 5/00
B 41 M 7/00

(30) Priorität: 16.05.79 DE 2919847

(43) Veröffentlichungstag der Anmeldung:
26.11.80 Patentblatt 80/24

(84) Benannte Vertragsstaaten:
AT BE CH DE FR GB IT LI LU NL SE

(71) Anmelder: Alkor-Werk Karl Lissmann GmbH & Co KG
Morgensternstrasse 9 Postfach 71 01 09
D-8000 München 71(DE)

(72) Erfinder: Schneider, Manfred
Assenweg 12
D-8000 München 83(DE)

(74) Vertreter: Weickmann, Heinrich, Dipl.-Ing
Patentanwälte Dipl.Ing.H.Weickmann et al,
Dipl.Phys.Dr.K.Fincke Dipl.Ing.F.A.Weickmann
Dipl.Chem.B.Huber, Dr.-Ing.H.Liska Möhlstrasse 22
D-8000 München 86(DE) .

(54) Flächengebilde mit Holzmaserung und Verfahren zu dessen Herstellung.

(57) Ein Flächengebilde auf der Basis einer Papier- oder Kunststoffolienbahn mit einem auf mindestens einer Seitenfläche angebrachten Holzmaserungsdekor, wobei auf der Bahn mittelbar oder unmittelbar mindestens ein unteres Druckbild entsprechend einem fotografischen Farbauszug einer Holzvorlage aufgedruckt ist, dieses Druckbild durch eine geschlossene transparente Schutzschicht abgedeckt ist und die transparente Schutzschicht ein Porenbild aufgrund eines weiteren Farbauszugs der Holzvorlage trägt; dabei ist das Porenbild passergenau zu dem unteren Druckbild erhaben auf die plane Schutzschicht aufgedruckt und besteht aus einer abrieb- und lösemittelfesten Druckfarbe.

./...

**FIG.2**

CCH

- 1 -

Flächengebilde mit Holzmaserung und Verfahren zu dessen
Herstellung

Die Erfindung betrifft ein Flächengebilde auf der Basis einer Papier- oder Kunststoffolienbahn mit einem auf mindestens einer Seitenfläche angebrachten Holzmaserungsdekor, wobei auf der Bahn mittelbar oder unmittelbar mindestens ein unteres Druckbild entsprechend einem fotografischen Farbauszug einer Holzvorlage aufgedruckt ist, dieses Druckbild durch eine geschlossene transparente Schutzschicht abgedeckt ist und die transparente Schutzschicht ein Porenbild aufgrund eines weiteren Farbauszugs der Holzvorlage trägt.

Ein solches Verfahren ist aus der DE-AS 24 45 o51 bekannt.

Bei dem bekannten Verfahren wird das Porenbild auf der Schutzschicht in der Weise hergestellt, daß nach einem Farbauszug, vorzugsweise dem der kräftigsten und/oder der porenreichsten Farbe entsprechenden Farbauszug der gleichen Holzvorlage, nach der auch das untere Druckbild gewonnen wurde, eine Prägewalze hergestellt wird, mit dieser Prägewalze porenartige Vertiefungen in die Schutzschicht eingeprägt werden und in die porenartigen Vertiefungen eine Farbe eingerakelt wird.

Dieses Verfahren hat sich im Großen und Ganzen bewährt. Es wurde jedoch festgestellt, daß es entgegen den Angaben in der DE-AS 24 45 o51 für das Erscheinungsbild des Holzmaserungsdekors doch wünschenswert wäre, eine Passerhaltigkeit zwischen dem Prägebild der porenartigen Vertiefungen und dem Druckbild zu bewirken. Es hat sich aber als ungemein schwierig erwiesen, Prägung und Druckbildherstellung passerhaltig durchzuführen.

Der Erfindung liegt die Aufgabe zugrunde, ein Flächengebilde der eingangs bezeichneten Art so auszubilden, daß eine vereinfachte Herstellung und eine noch bessere Imitation einer Holzmaserung erzielt wird.

Zur Lösung dieser Aufgabe wird erfindungsgemäß vorgeschlagen, daß das Porenbild passergenau zu dem unteren Druckbild erhaben auf die plane Schutzschicht aufgedruckt ist und aus einer abrieb- und lösemittelfesten Druckfarbe besteht.

Bei der Herstellung des erfindungsgemäßen Produkts können sowohl das untere als auch das obere Druckbild (Porenbild) nach herkömmlicher Drucktechnik, etwa im Rotationstiefdruckverfahren (direkt oder indirekt) erzeugt werden, so daß die Einhaltung der Passerhaltigkeit zwischen dem unteren und dem oberen Druckbild technisch ohne weiteres beherrschbar ist.

Überraschenderweise ist das erfindungsgemäße Flächengebilde im optischen Eindruck der Imitation einer Holzmaserung trotz des Fehlens einer Prägung dem weiter oben beschriebenen bekannten Produkt nicht nur gleichwertig, sondern in vielen Fällen überlegen. Es tritt

- 3 -

jedenfalls bei Betrachtung aus einem Abstand, wie er im praktischen Anwendungsfall zwischen einem Betrachter und einem Möbelstück oder einem Innenausbauteil immer besteht, trotz des Fehlens der Prägung eine räumliche optische Wirkung auf. Dieser Effekt konnte bisher nicht voll erklärt werden, könnte aber möglicherweise darauf zurückzuführen sein, daß die beiden Druckbilder durch die Schutzschicht in Abstand voneinander angeordnet sind.

Die Herstellung des unteren und oberen Druckbilds für die Herstellung des erfindungsgemäßen Flächengebildes kann in herkömmlicher Weise nach Farbauszügen einer Farbfotografie der jeweiligen Holzvorlage geschehen, wobei man im Erfindungsfalle für die Herstellung der das obere Druckbild erzeugenden Druckwalze denjenigen Farbauszug verwenden wird, welcher der kräftigsten und/oder porenreichsten Farbe der Holzvorlage entspricht. Das optische Erscheinungsbild einer Porenstruktur bei dem erfindungsgemäßen Flächengebilde kann dadurch unterstrichen werden, daß man für die Erzeugung des oberen Druckbildes eine gegenüber dem unteren Druckbild bzw. Druckbildern dunklere Farbe verwendet, z. B. eine schwarze oder dunkelbraune Farbe.

Es ist bereits bekannt, auf Papierbahnen zur Imitation einer Holzmaserung Poren dadurch passergenau zu einem unteren Druckbild vorzusehen, daß in einen das untere Druckbild abdeckenden Schutzfilm durch einen Ätzprozeß Poren ausgeätzt werden und diese Poren sodann mit einer Druckfarbe ausgerakelt werden. Dieses Verfahren hat den Nachteil, daß der Schutzfilm unterbrochen wird, so daß der Schutz für das untere Druckbild nicht mehr voll gewährleistet ist.

0019221

Weiterhin ist es bekannt, zur Gewinnung eines Holzmaserungsdekors auf einer Papierbahn über ein unteres Druckbild vor dem Aufbringen einer Schutzschicht passergenau ein der Porenverteilung entsprechendes Netz eines die später aufzubringende Schutzschicht aufweisenden Materials aufzudrucken und dann erst eine Schutzschicht aufzudrucken, so daß die Schutzschicht in denjenigen Flächenbereichen zusammenläuft, die nicht von Teilen des vorher aufgedruckten Netzes bedeckt sind. Auch dieses Verfahren ist mit dem Nachteil behaftet, daß keine geschlossene Schutzschicht für das untere Druckbild erhalten bleibt.

Bei der erfindungsgemäßen Ausgestaltung ist demgegenüber die Schutzschicht auch nach der Aufbringung des oberen Druckbildes (Porenbildes) geschlossen, so daß der Schutz des unteren Druckbildes voll gewährleistet ist und deshalb für die Herstellung des unteren Druckbildes bzw. der unteren Druckbilder Druckfarben verwendet werden können, die keine besondere Abriebfestigkeit und Lösungsmittelbeständigkeit aufweisen müssen.

Die Abriebfestigkeit und Lösungsmittelbeständigkeit des oberen Druckbildes bei der erfindungsgemäßen Ausführungsform kann dadurch gewährleistet werden, daß die Druckfarbe des oberen Druckbildes neben den den Farbton bestimmenden Pigmenten ein vernetzbares Bindemittel enthält, etwa ein UV-reaktives Acrylat-Polyester-System oder ein polyisocyanatvernetzbares Lacksystem.

Als Schutzschicht wird vorzugsweise eine Lackschicht verwendet, weil deren Auftragung im Rahmen der üblichen Drucktechniken für die Auftragung des unteren und des oberen Druckbildes keine wesentlichen Probleme bereitet. Die Schutzschicht enthält ihrerseits bevorzugt

0019221

vernetzbare Bestandteile, beispielsweise wiederum Acrylat-Polyester-Systeme oder isocyanatvernetzbare Systeme.

Alternativ kann die Schutzschicht auch aus einer aufkaschierten Schutzfolie gebildet sein, beispielsweise einer Polyesterfolie.

Die Wischfestigkeit des oberen Druckbildes auf der Schutzschicht kann dadurch gefördert werden, daß man für das obere Druckbild Lackbestandteile verwendet, welche in der Schutzschicht enthaltenen Lackbestandteilen chemisch gleich oder ähnlich sind.

Der optische Eindruck der Holzmaserung kann noch dadurch verbessert werden, daß man unterschiedlichen Glanzgrad (z. B. nach Gardener) für die Schutzschicht und für das obere Druckbild vorsieht.

Der unterschiedliche Glanzgrad läßt sich beispielsweise durch unterschiedliche Zugabe von Mattierungsmitteln erzielen.

Bevorzugt wird man den Glanzgrad des oberen Druckbildes im Hinblick auf den naturgetreuen Holzmaserungseffekt geringer, also matter, wählen als den Glanzgrad der Schutzschicht.

Die Erfindung befaßt sich weiter mit einem Verfahren zur Herstellung eines erfindungsgemäßen Flächengebildes; das erfindungsgemäße Verfahren besteht darin, daß man auf der Bahn das untere Druckbild aus Druckfarbe im Rotationstiefdruckverfahren (direkt oder indirekt) aufdruckt, daß man hierauf über dem ersten Druckbild die geschlossene Transparentschicht aufträgt und daß

0019221

man anschließend auf die ungeprägte Schutzschicht das obere Druckbild aus Druckfarbe im Rotationstiefdruckverfahren (direkt oder indirekt) aufdruckt.

Auch die Schutzschicht kann im Rotationstiefdruckverfahren aufgedruckt werden, vorzugsweise im direkten Rotationstiefdruckverfahren.

Entsprechend der oben erwähnten alternativen Ausbildung der Schutzschicht kann man diese auch als vorgebildete Bahn verlaufen lassen und gegebenenfalls unter Verwendung eines Haftvermittlers aufkaschieren.

Die Vorgänge des Druckens des ersten Druckbildes, des Aufbringens der Schutzschicht und des Aufbringens des oberen Druckbildes können nacheinander innerhalb ein und derselben Mehrwalzenrotationsdruckmaschine durchgeführt werden, was die Einhaltung der Passerhaltigkeit zwischen dem oberen Druckbild und dem unteren Druckbild bzw. den unteren Druckbildern wesentlich erleichtert.

Nachzutragen ist noch, daß im Falle mehrerer unterer Druckbilder diese mit Druckwalzen hergestellt werden können, die nach verschiedenen fotografischen Auszügen ein und derselben Holzvorlage hergestellt wurden.

Die beiliegenden Figuren erläutern die Erfindung. Es stellen dar:

Fig. 1 eine Draufsicht auf ein erfindungsgemäßes Flächengebilde mit Holzmaserung,

Fig. 2 einen vergrößerten Schnitt durch ein erfindungsgemäßes Flächengebilde.

BAD ORIGINAL

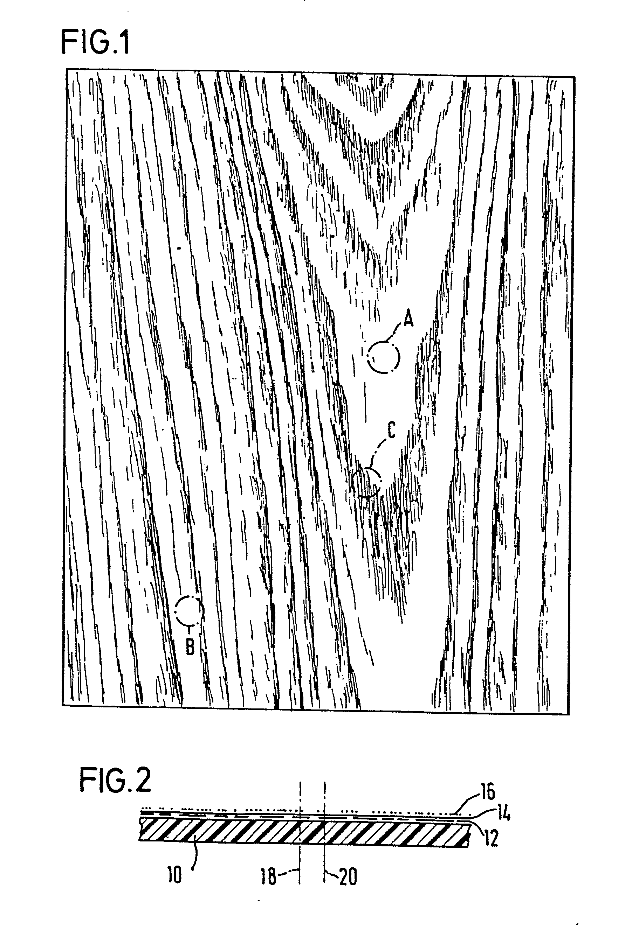

In Fig. 1 ist der optische Eindruck in den Flächenbereichen A und B im wesentlichen durch untere Druckbilder bestimmt, beispielsweise durch zwei untere Druckbilder im Falle eines insgesamt Drei-Farbendrucks. Die Porenimitation im Flächenbereich C hingegen kommt im wesentlichen durch das obere Druckbild zustande.

In Fig. 2 ist eine Papier- oder Kunststoffolienbahn mit 1o bezeichnet. Auf dieser Bahn 1o ist ein erstes Druckbild 12 aufgedruckt. Über dem Druckbild 12 liegt eine transparente Lackschicht 14 und auf die Lackschicht 14 ist ein oberes Druckbild 16 aufgedruckt. Die Passerhaltigkeit des oberen Druckbildes 16 und des unteren Druckbildes 12 ist durch die strichpunktierten Linien 18 und 2o angedeutet.

B e i s p i e l   1

Es wurde ein Drei-Farbendruckdessin nach einer Eichenvorlage hergestellt. Zunächst wurden zwei Holzstrukturen (unteres Druckbild 12 in Fig. 2) passergenau auf eine Folienbahn 1o gedruckt. Über diese zwei Druckbilder wurde ein widerstandsfähiger Seidenmattlack aufgetragen. Anschließend wurde das Porenbild (oberes Druckbild 16) auf die Seidenmattlackschicht aufgedruckt. Der Glanzgrad der Lackschicht 14 ist 2o % höher (nach Gardener) als der Lack des Druckbildes 16.

B e i s p i e l   2

Abweichend von Beispiel 1 wurde der Unterschied im Glanz zwischen der Porendruckfarbe des Druckbildes 16 und dem Lack der Schutzschicht 14 dadurch gewonnen, daß der Glanzgrad der Porendruckfarbe um 2o % höher eingestellt wurde als der Glanzgrad des Decklacks der Schutzschicht 14. Obwohl dies Umkehrung nicht den Verhältnissen an einer Originalholzvorlage entspricht, ergab sich überraschenderweise ein ähnliches Bild.

Als Bindemittel wurde in Beispielen 1 und 2 sowohl für die Schutzschicht 14 als auch für das Druckbild 16 ein polyisocyanatvernetzbares System verwendet.

B e i s p i e l 3

Ein Drei-Farbendessin nach einer Eschenvorlage wurde hergestellt: Zunächst wurden zwei Grundstrukturen entsprechend dem Druckbild 12 übereinander bzw. nebeneinander gedruckt. Über dem Druckbild 12 wurde sodann eine Schutzschicht 14 auf der Basis eines UV-reaktiven Acrylat-Polyester-Systems auflackiert. Diese Schutzschicht wurde durch UV-Einstrahlung innerhalb der Druckmaschine gehärtet. Auf die gehärtete Schutzschicht 14 wurde sodann ein mittelbraunes Porendruckbild entsprechend dem Druckbild 16 der Fig. 2 aufgedruckt aus einer Druckfarbe, die ebenfalls ein UV-reaktives Acrylat-Polyester-System enthielt. Die Relation des Glanzgrads war wie in Beispiel 1. Die Druckfarbe des oberen Druckbildes 16 wurde ebenfalls innerhalb der Rotationstiefdruckmaschine durch UV-Einstrahlung gehärtet.

B e i s p i e l 4

Anstelle des transparenten Schutzlacks gemäß den Beispielen 1 bis 3 wurde ein Transparentfilm aus einem Co-Polyester naß aufkaschiert, der in Fig. 2 der Schutzschicht 14 entspricht. Auf diesen Co-Polyesterfilm wurde das obere Druckbild 16 gemäß Fig. 2 passergenau aufgedruckt.

0019221

- 1 -

<u>P a t e n t a n s p r ü c h e</u>

1. Flächengebilde auf der Basis einer Papier- oder Kunststoffolienbahn mit einem auf mindestens einer Seitenfläche angebrachten Holzmaserungsdekor, wobei auf der Bahn mittelbar oder unmittelbar mindestens ein unteres Druckbild entsprechend einem fotografischen Farbauszug einer Holzvorlage aufgedruckt ist, dieses Druckbild durch eine geschlossene transparente Schutzschicht abgedeckt ist und die transparente Schutzschicht ein Porenbild aufgrund eines weiteren Farbauszugs der Holzvorlage trägt, dadurch g e k e n n z e i c h n e t , daß das Porenbild (16) passergenau zu dem unteren Druckbild (12) erhaben auf die plane Schutzschicht aufgedruckt ist und aus einer abrieb- und lösemittelfesten Druckfarbe besteht.

2. Flächengebilde nach Anspruch 1, dadurch g e - k e n n z e i c h n e t , daß das obere Druckbild (16) ein vernetzbares Bindemittel enthält.

3. Flächengebilde nach Anspruch 1 oder 2, dadurch g e k e n n z e i c h n e t , daß die Schutzschicht (14) eine Lackschicht ist.

0019221

4. Flächengebilde nach Anspruch 3, dadurch g e - k e n n z e i c h n e t , daß die Schutzschicht (14) aus vernetzbarem Material besteht oder solches enthält.

5. Flächengebilde nach Anspruch 1 oder 2, dadurch g e k e n n z e i c h n e t , daß die Schutzschicht (14) aus einer aufkaschierten Schutzfolie gebildet ist.

6. Flächengebilde nach einem der Ansprüche 1 bis 5, dadurch g e k e n n z e i c h n e t , daß die Druck- farbe des oberen Druckbildes (16) ein Bindemittel enthält, welches der Schutzschicht (14) oder einem Bestandteil der Schutzschicht chemisch verwandt ist.

7. Flächengebilde nach einem der Ansprüche 1 bis 6, dadurch g e k e n n z e i c h n e t , daß das obere Druckbild (16) einen vom Glanzgrad der Schutzschicht (14) abweichenden Glanzgrad besitzt.

8. Flächengebilde nach Anspruch 7, dadurch g e - k e n n z e i c h n e t , daß der Glanzgrad des oberen Druckbildes (16) geringer ist als der Glanzgrad der Schutzschicht (14).

9. Verfahren zur Herstellung eines Flächengebildes nach einem der Ansprüche 1 bis 8, dadurch g e k e n n - z e i c h n e t , daß man auf der Bahn das untere Druckbild aus Druckfarbe im Rotationstiefdruckverfahren (direkt oder indirekt) aufdruckt, daß man hierauf über dem ersten Druckbild die geschlossene Transparentschicht aufträgt und daß man anschließend auf die ungeprägte Schutzschicht das obere Druckbild aus Druckfarbe im Ro- tationstiefdruckverfahren (direkt oder indirekt) auf- druckt.

0019221

10.     Verfahren zur Herstellung eines Flächengebildes nach Anspruch 9, dadurch  g e k e n n z e i c h n e t , daß man die Schutzschicht als Schutzlackschicht im Rotationstiefdruckverfahren (vorzugsweise direkt) aufträgt.

11.     Verfahren zur Herstellung eines Flächengebildes nach Anspruch 9, dadurch  g e k e n n z e i c h n e t , daß man die Schutzschicht als vorgebildete Schutzfolie zulaufen läßt und aufkaschiert.

12.     Verfahren zur Herstellung eines Flächengebildes nach einem der Ansprüche 9 bis 11, dadurch  g e k e n n - z e i c h n e t , daß man die Vorgänge des Druckens des unteren Druckbildes, des Aufbringens der Schutzschicht und des Druckens des oberen Druckbildes fortlaufend hintereinander in einer Mehrwalzendruckmaschine durchführt.

FIG.1

FIG.2